Europäisches Patentamt

European Patent Office

Office européen des brevets

(19)

(11) **EP 1 278 673 B1**

(12) **EUROPÄISCHE PATENTSCHRIFT**

(45) Veröffentlichungstag und Bekanntmachung des Hinweises auf die Patenterteilung:
**07.09.2005 Patentblatt 2005/36**

(21) Anmeldenummer: **01929581.5**

(22) Anmeldetag: **19.04.2001**

(51) Int Cl.⁷: **B61L 23/04**, B61K 9/12, G01M 17/10

(86) Internationale Anmeldenummer:
**PCT/EP2001/004430**

(87) Internationale Veröffentlichungsnummer:
**WO 2001/081147 (01.11.2001 Gazette 2001/44)**

(54) **VERFAHREN ZUM ÜBERWACHEN VON FAHREIGENSCHAFTEN EINES SCHIENENFAHRZEUGES**

METHOD FOR MONITORING DRIVING CHARACTERISTICS OF A RAIL VEHICLE

PROCEDE DE SURVEILLANCE DE CARACTERISTIQUES DE DEPLACEMENT D'UN VEHICULE SUR RAIL

(84) Benannte Vertragsstaaten:
**AT BE CH CY DE DK ES FI FR GB GR IE IT LI LU MC NL PT SE TR**

(30) Priorität: **19.04.2000 DE 10020519**

(43) Veröffentlichungstag der Anmeldung:
**29.01.2003 Patentblatt 2003/05**

(73) Patentinhaber: **DB Fernverkehr AG**
**60326 Frankfurt (DE)**

(72) Erfinder:
- **SÄGLITZ, Mario**
  **12163 Berlin (DE)**
- **SUNDER, Reinhold**
  **85778 Haimhausen (DE)**
- **KOLBASSEFF, Alexander**
  **83527 Haag-Rosenberg (DE)**
- **KIENINGER, Kurt**
  **81827 München (DE)**

- **ACKERMANN, Thomas**
  **85368 Wang (DE)**

(74) Vertreter: **Zinken-Sommer, Rainer**
**Deutsche Bahn AG**
**Patentabteilung TZ 02**
**Völckerstrasse 5**
**80939 München (DE)**

(56) Entgegenhaltungen:
WO-A-82/00805        DE-A- 19 826 115
DE-A- 19 837 476     US-A- 4 530 076
US-A- 5 433 111

- **PATENT ABSTRACTS OF JAPAN vol. 1998, no. 14, 31. Dezember 1998 (1998-12-31) & JP 10 253444 A (TOKYO GAS CO LTD;MITSUBISHI HEAVY IND LTD; ENTOROPII SOFTWARE KENKYUSH), 25. September 1998 (1998-09-25) & US 6 170 333 B1 (JINNAI ET AL.) 9. Januar 2001 (2001-01-09)**

EP 1 278 673 B1

**Beschreibung**

Die Erfindung betrifft ein Verfahren zum Überwachen von Fahreigenschaften eines Schienenfahrzeuges.

Es ist bekannt, dass Schienenfahrzeuge spurgebunden fahren. Die Spurführung wird hierbei über einen Rad-Schiene-Kontakt realisiert. Diesem Rad-Schiene-Kontakt kommt, insbesondere auch bei Hochgeschwindigkeitszügen, eine besondere sicherheitsrelevante Bedeutung zu. Unregelmäßigkeiten am Rad-Schiene-Kontakt, beispielsweise durch Beschädigungen des Rades, können zu erheblichen Folgeschäden, beispielsweise zum Entgleisen, führen.

Aus der DE 198 37 476 A1 ist ein Verfahren bekannt, bei dem das Schall- und/oder Schwingungsverhalten der Schienenfahrzeuge während des Einsatzes online erfasst wird und die erfassten Messergebnisse mit einem Referenzwert verglichen werden, wobei der Referenzwert fahrortbezogen zur Verfügung gestellt wird. In der DE 198 26 115 A1 wird eine Eigenfrequenzanalyse als Referenz verwendet.

Aus der DE 198 37 485 A1 und der DE 198 37 486 sind Verfahren zum Erkennen von Schäden an Schienenfahrzeugen und/oder Gleisen bekannt, bei denen mittels Sensoren auf das Schienenfahrzeug einwirkende Schock- oder Stoßbelastungen erfasst und ausgewertet werden. Aus dem zeitlichen Ansprechverhalten der Sensoren soll auf eine Schädigung am Schienenfahrzeug oder eine Schädigung an dem Gleis geschlossen werden.

Der Erfindung liegt die Aufgabe zugrunde, ein Verfahren der gattungsgemäßen Art zu schaffen, mit dem in einfacher Weise eine Schädigung einer Komponente eines Schienenfahrzeuges detektierbar ist.

Erfindungsgemäß wird diese Aufgabe durch ein Verfahren mit den im Anspruch 1 genannten Merkmalen gelöst. Dadurch, dass eine von einem Rad-Schiene-Kontakt ausgehende Schwingungsanregung hervorgerufene Schwingung wenigstens einer Fahrzeugkomponente erfasst und einer Filterung unterzogen wird, um einen Schwingungsverlauf auf Basis definierter Frequenzen zu erhalten und bei vorgebbarer Abweichung einer Schwingungswerteverteilung des gefilterten Schwingungsverlaufs von einer Normalverteilung auf ein Schadensereignis erkannt wird, lässt sich mittels statistischer Bewertungsmethoden eine sichere Erkennung von Schäden an einer Komponente eines Schienenfahrzeuges detektieren. Insbesondere, wenn die Verteilung mittels eines Kurtosisverfahrens untersucht wird, lässt sich eine gesicherte Aussage hinsichtlich einer Schädigung einer Komponente, insbesondere eines Rades bei einem Rad-Schiene-Kontakt, an Schienenfahrzeugen treffen. Infolge von Schädigungen des Rades treten beim Abrollen des Rades auf der Schiene an den Schadstellen Stoßbelastungen auf, die mittels Beschleunigungsaufnehmern in an sich bekannter Weise erfassbar sind. Diese Stoßbelastungen führen zu einem Zeitsignal, das sich aus einer Überlagerung vieler Signalanteile unterschiedlicher Frequenz zusammensetzt. Durch Filterung des Zeitsignals derart, das lediglich bestimmte definierte Frequenzen, insbesondere in einem definierten Frequenzbereich, herausgefiltert werden, ergibt sich ein Zeitsignal, das nur noch eine Überlagerung der Signalanteile der definierten Frequenzen aufweist. Dieses Zeitsignal wird vorzugsweise in festlegbare Zeitabschnitte zerlegt, wobei eine erfindungsgemäße Auswertung für jeden der Zeitabschnitte erfolgt. Hierbei kann entsprechend der erkannten Verteilung auf bestimmte Schädigungen des Rades und/oder des Radsatzes und/oder Radlager oder dergleichen geschlossen werden.

Insbesondere bei Überwachung einer Tendenz der Verteilung lässt sich eine Onboard-Diagnose der Räder und/oder des Radsatzes und/oder Radlager oder dergleichen durchführen, so dass frühzeitig eine Schädigung erkennbar wird. Hierdurch wird eine rechtzeitige Einleitung von Abhilfemaßnahmen, beispielsweise Reparaturen, Austausch oder dergleichen, möglich.

Die Erfindung ermöglicht insbesondere eine zustandsbezogene Instandhaltung von Komponenten von Schienenfahrzeugen. Das Überwachungsverfahren kann insbesondere kontinuierlich während des Einsatzes der Schienenfahrzeuge durchgeführt werden. Das Verfahren lässt sich in einfacher Weise in eine Onboard-Diagnose des Schienenfahrzeuges integrieren.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen näher erläutert. Es zeigen:

Figur 1    eine schematische Perspektivansicht eines Laufdrehgestelles eines Schienenfahrzeuges;

Figur 2    Verteilungskurven;

Figur 3    Kennlinien einer ersten möglichen Schädigung eines Rades;

Figur 4    Kennlinien einer zweiten möglichen Schädigung eines Rades und

Figur 5    Kennlinien einer dritten möglichen Schädigung eines Rades.

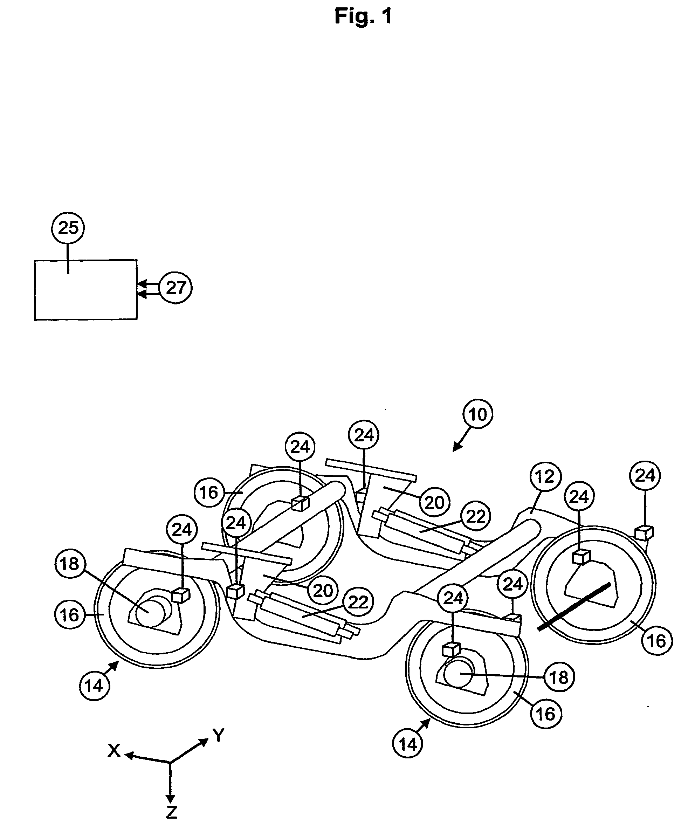

Figur 1 zeigt schematisch eine Perspektivansicht eines Laufdrehgestelles 10 für ein Schienenfahrzeug, insbesondere für ein Hochgeschwindigkeitsschienenfahrzeug. Das Laufdrehgestell 10 umfasst einen Drehgestellrahmen 12, der über nicht dargestellte sekundäre Feder/Dämpfersysteme mit einem ebenfalls nicht dargestellten Wagenkasten verbunden ist. An dem Drehgestellrahmen 12 sind über ebenfalls nicht dargestellte primäre Feder/Dämpfersysteme Radsätze 14 angeordnet. Die Radsätze 14 besitzen Räder 16, die über Radlager 18 gelagert sind. Ferner ist eine Schlingerdämpferkonsole 20 erkennbar, die am Wagenkasten befestigt ist. Die Schlingerdämpferkonsolen 20 sind über Schlingerdämpfer 22 mit dem Drehgestellrahmen 12 verbunden.

Aufbau und Funktion derartiger Laufdrehgestelle 10 sind allgemein bekannt, so dass im Rahmen der vorliegenden Beschreibung hierauf nicht näher eingegangen werden soll. Insbesondere ist bekannt, dass die Räder 16 auf einem Fahrweg, das heißt schienenspurgebunden, abrollen.

Dem Laufdrehgestell 10 sind hier jeweils schematisch angedeutete Schwingungsaufnehmer 24 zugeordnet. Die Schwingungsaufnehmer 24 können beispielsweise an den Radlagern 18, den Schwingungsdämpferkonsolen 20 sowie an einer Klammerungsvorrichtung des Drehgestellrahmens 12 angeordnet sein. Die Schwingungsaufnehmer 24 sind beispielsweise triaxiale Beschleunigungssensoren, die auf die einzelnen mit den Schwingungsaufnehmern ausgestatteten Fahrzeugkomponenten einwirkende Beschleunigungen in den drei Raumrichtungen, also x-Richtung, y-Richtung und z-Richtung, detektieren. In Figur 1 ist hierzu ein Koordinatensystem mit den Raumrichtungen eingezeichnet.

Die von den Schwingungsaufnehmern 24 gelieferten Signale werden einer lediglich schematisch dargestellten Auswerteschaltung 25, die fahrzeuggebunden oder zuggebunden angeordnet sein kann, zugeführt. Anhand der von den Schwingungsaufnehmern gelieferten Signale 27 wird ein Schwingungsverhalten der einzelnen Fahrzeugkomponenten überwacht, um bei Unter- und/oder Überschreiten vorgebbarer Referenzwerte auf einen Schädigungszustand zu schließen. Die Aufbereitung der von den Schwingungsaufnehmern gelieferten Signale 27 kann beispielsweise durch eine Frequenz/Filterung erfolgen.

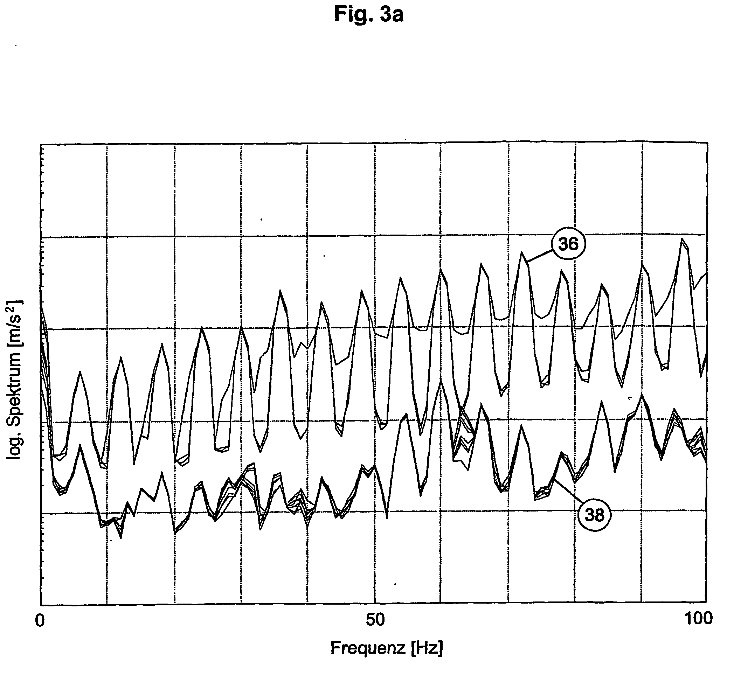

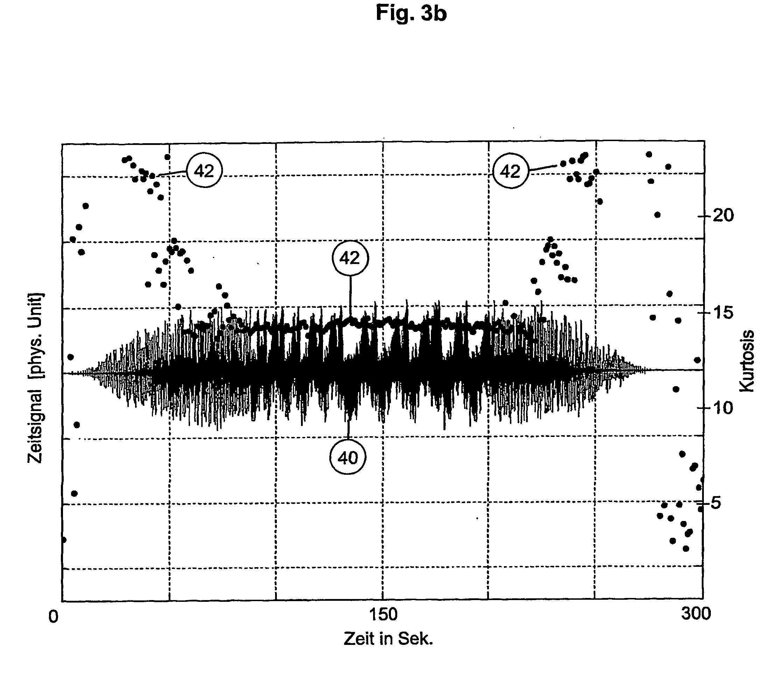

Bei den anhand der Figuren 3, 4 und 5 erläuterten Ausführungsbeispielen wird von einer Analyse des mit 24' bezeichneten Schwingungsaufnehmers am Radlager 18' des Rades 16' ausgegangen. Und zwar ist das in z-Richtung des Schwingungsaufnehmers 24 detektierte Signal gezeigt. Es ist klar, dass sämtliche andere Schwingungsaufnehmer 24 an einer der Fahrzeugkomponenten in analoger Weise zu einer Auswertung und somit zu der noch zu erläuternden Schadensfrüherkennung einzelner Komponenten herangezogen werden können. Die beispielhaften Erläuterungen beziehen sich auf die Erkennung von Schäden am Rad 16', insbesondere dessen in Kontakt mit der nicht dargestellten Schiene liegenden Lauffläche. Besitzt die Lauffläche Unregelmäßigkeiten, zum Beispiel Flachstellen, Unrundheiten oder dergleichen, führt dies beim Abrollen über die Schiene zu spezifischen Schwingungsanregungen, die über den Schwingungsaufnehmer 24' insbesondere in z-Richtung erfassbar sind.

Die Schwingungsanregung des Schwingungsaufnehmers 24 infolge des Rad-Schiene-Kontaktes kann in erster Näherung als randome Anregung mit Gauß-Verteilung (Normalverteilung) angenommen werden. Dies schließt ein, dass bei bestimmten Fahrsituationen, beispielsweise Weichenfahrt, erwartete Abweichungen von der Normalverteilung möglich sind.

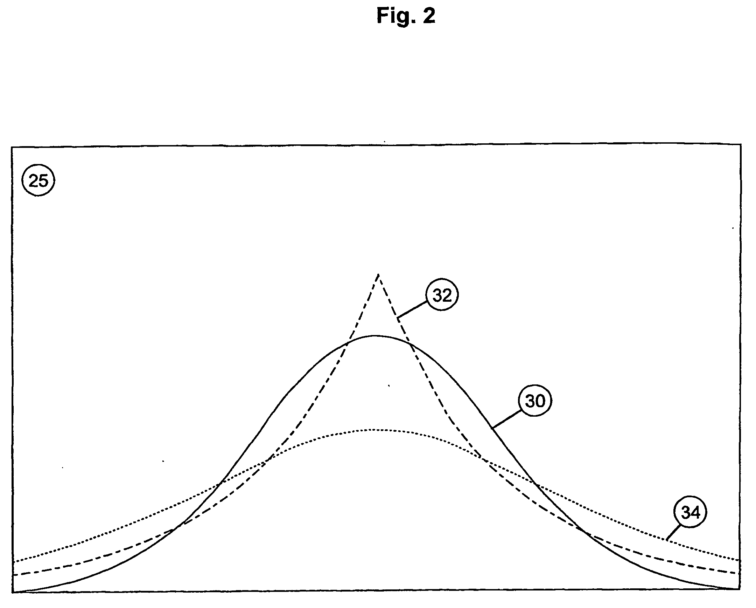

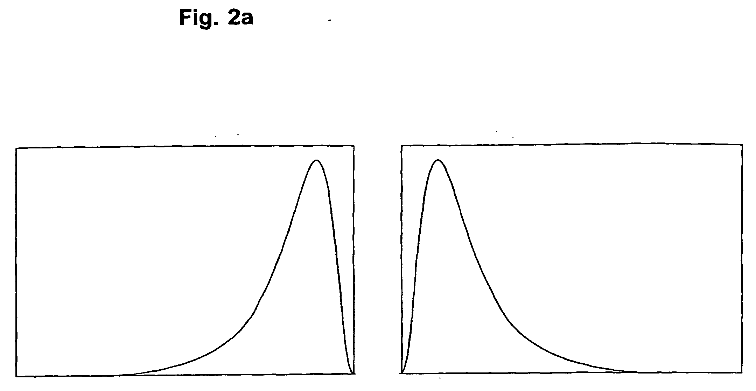

Figur 2 zeigt die Glockenkurve der Gauß-Verteilung mit Normalverteilung mit dem Bezugszeichen 30. Hierbei wird der Mittelwert der Glockenkurve durch das sogenannte erste Moment, die mittlere quadratische Abweichung mit dem zweiten Moment beschrieben. Das dritte Moment steht für die Schiefe der Verteilung und das vierte Moment für die Wölbung (Kurtosis). Schiefe und Wölbung einer Verteilung sind die Maßzahlen, die eine Verteilung charakterisieren. In Figur 2 sind beispielsweise eine Verteilungskurve mit starker Wölbung (Bezugszeichen 32) und eine Verteilungskurve mit geringer Wölbung (Bezugszeichen 34) angedeutet. Charakteristisch für starke und geringe Wölbung ist, dass in den Randbereichen die statistische Verteilung höher ist als bei der Normalverteilung 30.

Der Schiefeparameter einer Verteilung kann sowohl einen positiven, wie die rechtsschiefe Verteilung in Figur 2a zeigt, oder einen negativen Wert, wie die linksschiefe Verteilung in Figur 2b zeigt, annehmen. Die Schiefe einer Verteilung, also das dritte Moment, ist mathematisch definiert zu

$$m_3 = \int\limits_{-\infty}^{\infty}(x - \bar{x})^3 \, f(x)dx \, .$$

Dadurch, dass die Abstände der Daten zum arithmetischen Mittel in der Potenz erhoben werden, bleiben die Vorzeichen erhalten. Hierdurch überwiegen von der Größe her bei rechtsschiefen beziehungsweise linksschiefen Verteilungen die positiven beziehungsweise negativen Abweichungen. Nachfolgend wird auf die Auswertung des vierten zentralen Momentes näher eingegangen. In vollkommen analoger Weise ist auch eine Auswertung des dritten zentralen Momentes im Sinne der Erfindung.

Das vierte zentrale Moment gibt Auskunft über die Kurtosis (Wölbung) einer Verteilung. Diese gibt an, ob bei gleicher Streuung der zentrale Bereich um den Mittelwert und Randbereiche der Verteilung stärker oder schwächer besetzt sind als bei einer Normalverteilung, wie Figur 2 verdeutlicht. Die Kurtosis einer Verteilung ist mathematisch definiert:

$$m_4 = \int\limits_{-\infty}^{\infty}(x - \bar{x})^4 \, f(x)dx \, .$$

Für ein reines Sinussignal liegt der Kurtosiswert bei 1,5 und für ein randomes Signal mit Normalverteilung (Normalkurve gemäß Bezugszeichen 30) bei 3. Bei Abweichungen von der Normalverteilung, die beispielsweise von starken Stoßanregungen beim Rad-Schiene-Kontakt herrühren, steigt der Kurtosiswert deutlich über den Wert 3 an. Hierdurch ist der Kurtosiswert geeignet, als sensitiver Parameter zur Detektion von Schadstellen am Rad 16 jedoch auch beispielsweise von Schäden an den Radlagern 18 beziehungsweise von Schäden an dem Fahrweg oder anderer Fahrzeugkomponenten herangezogen zu werden.

In den Figuren 3 bis 5 sind drei konkrete Zustände des Rades 16 herbeigeführt und gemäß dem erfindungsgemäßen Verfahren untersucht worden.

Figur 3 zeigt eine Schädigung mit einer Flachstelle an der Lauffläche des Rades 16', die eine Tiefe von zirka 0,5 mm und eine Länge von zirka 80 mm aufweist. Das Schienenfahrzeug wurde hierbei mit einer Geschwindigkeit von 60 km/h gefahren. In Figur 3a ist eine Kennlinie 36 aufgetragen, die die Spektren der Frequenz von 0 bis 100 Hz verdeutlicht. Die Kennlinie 38 verdeutlicht zum Vergleich die Spektren eines nicht geschädigten Rades.

Die Schwingungsmessung erfolgte mittels des Sensors 24' in z-Richtung (Figur 1). Es wird deutlich, dass das charakteristische Verhalten des mit der harten Flachstelle versehenen Rades 16' ein deutliches Anwachsen des drehfrequenten Anteiles mit Erhöhungen im Bereich der höheren harmonischen Frequenzanteile zeigt. Das Anwachsen des drehfrequenten Anteiles und der höheren harmonischen Frequenzanteile beruht darauf, dass bei einer Flachstelle die Lauffläche des Rades kurzzeitig nicht auf der Schiene aufliegt, so dass es zu Stößen im Schiene-Rad-Kontakt kommt.

Figur 3b zeigt den Verlauf des Messsignales des Schwingungsaufnehmers 24' in z-Richtung über der Zeit. Diese Kurve ist mit 40 bezeichnet. Es wird der unruhige und stoßartige Strukturen aufweisende Verlauf deutlich.

Gleichzeitig ist in Figur 3b mit 42 der Kurtosisverlauf des Signales 36 dargestellt. Die Kurtosiswerte der Kennlinie 42 liegen im mittleren Zeitbereich, also nach dem Anfahren und vor dem Abbremsen, deutlich über dem Normalwert von 3, nämlich zirka bei 14. Es wird also deutlich, dass die Auswertung der Kurtosiswerte ein eindeutiges Ergebnis für eine Schädigung des Rades, hier für eine harte Flachstelle, liefern.

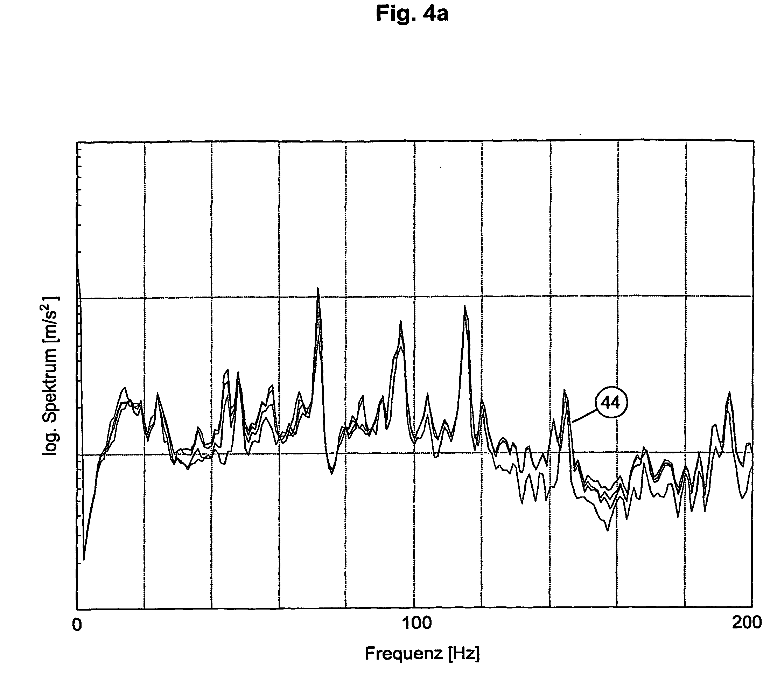

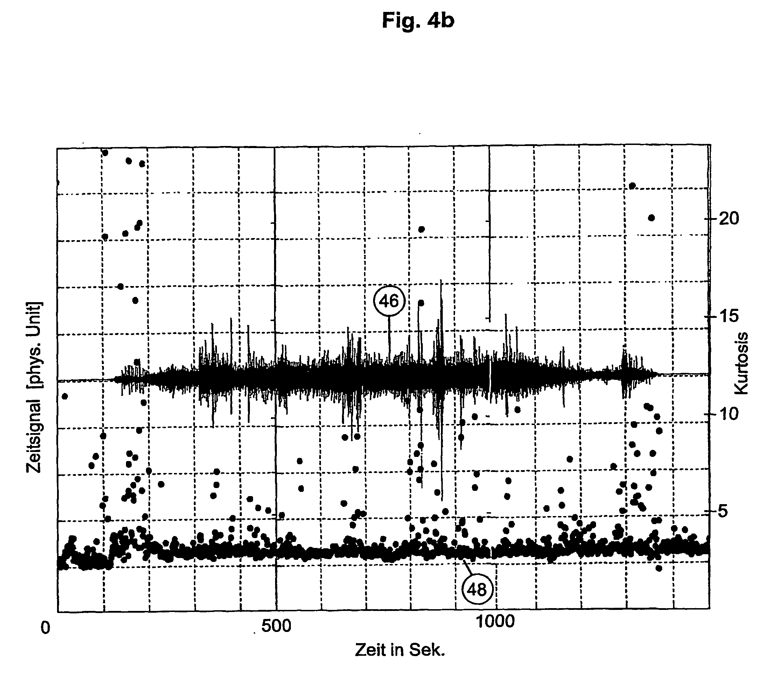

In Figur 4 ist ein Beispiel für einen Signalverlauf des Sensors 24' in z-Richtung bei einem eine Laufleistung von zirka 95000 km aufweisenden Rad 16' dargestellt. Die Versuchsgeschwindigkeit betrug bis zu 250 km/h.

Figur 4a zeigt das Frequenzspektrum im Bereich von 0 bis 200 Hz (Kennlinie 44). Figur 4b zeigt das Zeitsignal des Schwingungsaufnehmers 24' (Kennlinie 46), während in Figur 4b mit 48 der Verlauf der Kurtosiswerte dargestellt ist. Es wird deutlich, dass im Mittel der Kurtosiswert ungefähr bei einem Wert von 3 liegt, das heißt im Normalbereich ist. Somit ist das für den Versuch eingesetzte, die genannte Laufleistung aufweisende Rad nicht geschädigt, das heißt, beim Rad-Schiene-Kontakt gehen keine Stoßereignisse direkt vom Rad aus. Die in Figur 4b dargestellten Kurtosiswerte, die lediglich vereinzelt höher als der Mittelwert von 3 liegen, sind zum Beispiel auf sogenannte Weichenstöße, insbesondere bei Fahrt mit niedriger Geschwindigkeit (linker Abschnitt der Kurven), zurückzuführen.

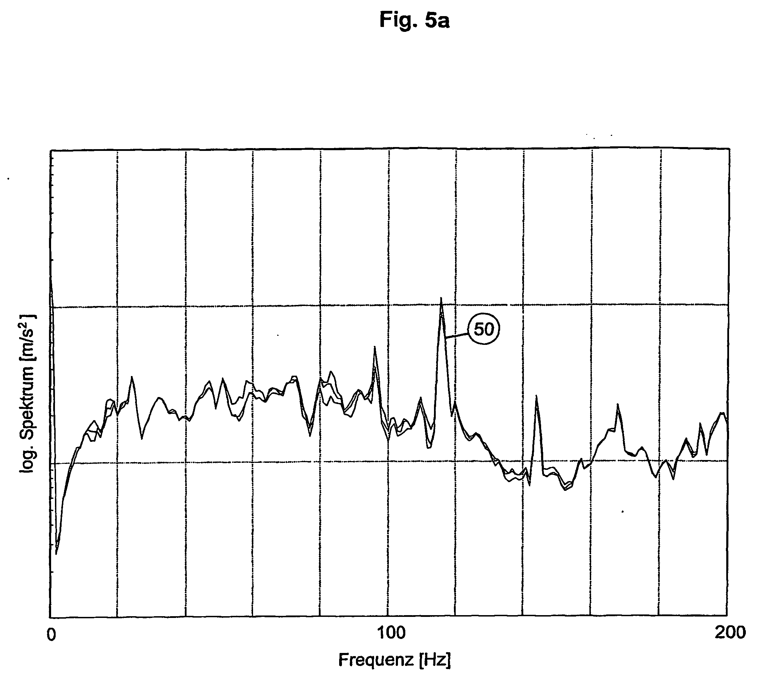

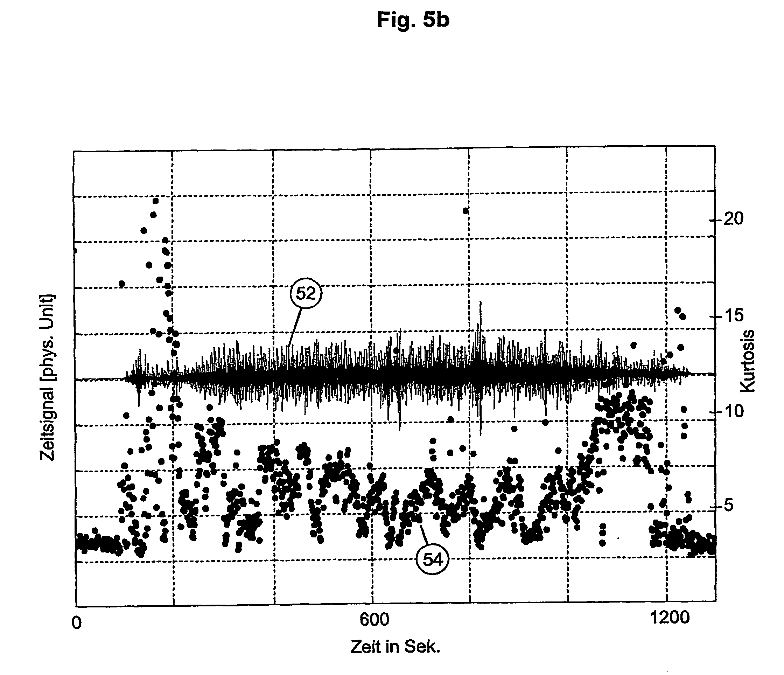

Figur 5 zeigt als weiteres Ausführungsbeispiel wiederum in Figur 5a ein Frequenzspektrum (Kennlinie 50) eines Rades 16, bei dem ein geringer Laufflächenfehler (Ausbröckelung) vorhanden ist. Wie dem zugehörigen Zeitsignal (Kennlinie 52) und insbesondere den Kurtosiswerten (Kennlinie 54) zu entnehmen ist, wirkt sich dieses auf die Verteilung der Kurtosiswerte deutlich aus, so dass der Kurtosiswert im Mittel deutlich über 3 liegt. Auch dies ist ein Indiz dafür, dass die Auswertung der Kurtosiswerte unmittelbar in Beziehung zu Fehlern auf der Lauffläche des Rades stehen.

**Patentansprüche**

1. Verfahren zum Überwachen von Fahreigenschaften eines Schienenfahrzeuges, wobei eine von einem Rad-Schiene-Kontakt ausgehende Schwingungsanregung hervorgerufene Schwingung wenigstens einer Fahrzeugkomponente erfasst wird, **dadurch gekennzeichnet, daß** die Schwingung einer Filterung unterzogen wird, um einen Schwingungsverlauf auf Basis definierter Frequenzen zu erhalten und bei vorgebbarer Abweichung einer Schwingungswerteverteilung des gefilterten Schwingungsverlaufs von einer Normalverteilung auf ein Schadensereignis erkannt wird.

2. Verfahren nach Anspruch 1, **dadurch gekennzeichnet, dass** der Kurtosiswerte-Verlauf wenigstens eines von wenigstens einem Schwingungsaufnehmer (24) gelieferten Signales (27) ausgewertet wird.

3. Verfahren nach einem der vorhergehenden Ansprüche, **dadurch gekennzeichnet, dass** eine Tendenz der Kurtosiswerte ausgewertet wird.

4. Verfahren nach einem der vorhergehenden Ansprüche, **dadurch gekennzeichnet, dass** das Verfahren kontinuierlich während des bestimmungsgemäßen Einsatzes des Schienenfahrzeuges durchgeführt wird.

5. Verfahren nach einem der vorhergehenden Ansprüche, **dadurch gekennzeichnet, dass** das Verfahren als Onboard-Diagnose durchgeführt wird.

**6.** Anordnung zum Überwachen von Fahreigenschaften eines Schienenfahrzeuges, wobei Mittel zum Erfassen einer Schwingung wenigstens einer Fahrzeugkomponente vorgesehen sind, die durch eine von einem Rad-Schiene-Kontakt ausgehende Schwingungsanregung hervorgerufen wird, **dadurch gekennzeichnet, daß** das Schwingungssignal einer Filterung unterziehbar ist, um einen Schwingungsverlauf auf Basis definierter Frequenzen zu erhalten und bei vorgebbarer Abweichung einer Schwingungswerteverteilung des gefilterten Schwingungsverlaufs von einer Normalverteilung auf ein Schadensereignis erkennbar ist.

## Claims

**1.** A method for monitoring the driving characteristics of a rail vehicle, wherein a vibration of at least one vehicle component that is caused by the vibrational excitation originating from a wheel-rail contact is detected, **characterized in that** the vibration is subjected to a filtering process in order to obtain a vibration curve on the basis of defined frequencies, and **in that** a defect event is identified when a predetermined deviation of a vibration value distribution of the filtered vibration curve from a normal distribution is detected.

**2.** The method according to Claim 1, **characterized in that** the kurtosis value curve of at least one signal (27) delivered by at least one vibration sensor (24) is evaluated.

**3.** The method according to one of the preceding claims, **characterized in that** a tendency of the kurtosis values is evaluated.

**4.** The method according to one of the preceding claims, **characterized in that** the method is carried out continuously during the normal operation of the rail vehicle.

**5.** The method according to one of the preceding claims, **characterized in that** the method is carried out in the form of an on-board diagnosis.

**6.** An arrangement for monitoring the driving characteristics of a rail vehicle, wherein a means is provided for detecting a vibration of at least one vehicle component that is caused by the vibrational excitation originating from the wheel-rail contact, **characterized in that** the vibration signal can be subjected to a filtering process in order to obtain a vibration curve on the basis of defined frequencies, and **in that** a defect event can be identified when a predetermined deviation of a vibration value distribution of the filtered vibration curve from a normal distribution is detected.

## Revendications

**1.** Procédé de surveillance des propriétés de circulation d'un véhicule ferroviaire, dans lequel une oscillation provoquée par une excitation d'oscillation provenant d'un contact rail-roue d'au moins une composante de véhicule est enregistrée, **caractérisé en ce que** l'oscillation est soumise à un filtrage afin d'obtenir une courbe d'oscillation sur la base de fréquences définies et, qu'en cas d'écart prescriptible d'une répartition de valeurs d'oscillation de la courbe d'oscillations filtrée par rapport à une répartition normale, on en déduit un phénomène de détérioration.

**2.** Procédé selon la revendication 1, **caractérisé en ce que** la courbe des valeurs de kurtose d'au moins un signal (27) délivré par au moins un capteur d'oscillations (24) est exploitée.

**3.** Procédé selon une des revendications précédentes, **caractérisé en ce qu'**une tendance des valeurs de kurtose est exploitée.

**4.** Procédé selon une des revendications précédentes, **caractérisé en ce que** le procédé est réalisé en continu pendant l'usage conforme à la destination du véhicule ferroviaire.

**5.** Procédé selon une des revendications précédentes, **caractérisé en ce que** le procédé est réalisé sous forme d'un diagnostic de bord.

**6.** Dispositif de surveillance des propriétés de circulation d'un véhicule ferroviaire, dans lequel sont prévus des moyens d'enregistrement d'une oscillation d'au moins un composant du véhicule provoquée par une excitation d'oscillation provenant d'un contact roue-rail, **caractérisé en ce que** le signal d'oscillation peut être soumis à un filtrage afin d'obtenir une courbe d'oscillation sur la base de fréquences définies et qu'en cas d'écart prescriptible d'une répartition de valeurs d'oscillation de la courbe d'oscillations filtrée par rapport à une répartition normale, on peut détecter un phénomène de détérioration.

# Fig. 1

**Fig. 2**

**Fig. 2a**

**Fig. 3a**

**Fig. 3b**

**Fig. 4a**

**Fig. 4b**

## Fig. 5a

Fig. 5b

EP 1 278 673 B1

14